# EUROPEAN PATENT SPECIFICATION

(11) **EP 1 759 908 B1**
(45) Date of publication and mention of the grant of the patent: **22.10.2008**
(21) Application number: 06119940.2
(22) Date of filing: 31.08.2006
(51) Int. Cl.: B60K 11/08, F01P 5/06, F01P 11/10, F02M 35/10

(54) **Device for air transfer in an engine compartment and vehicle comprising such a device**
Luftführungsvorrichtung in einem Motorraum und Fahrzeug mit solcher Vorrichtung
Dispositif de transport d'air dans un compartiment moteur et véhicule comprenant un tel dispositif

(30) Priority: 01.09.2005 FR 0508986
(43) Date of publication of application: 07.03.2007
(73) Proprietor: MARK IV SYSTEMES MOTEURS (SAS), 92400 Courbevoie (FR)
(72) Inventor: Menin, Denis, 68125 HOUSSEN (FR); Germain, Laurent, 88000 JEUXEY (FR); Komurian, Richard, 68230 TURCKHEIM (FR)
(74) Representative: Jorio, Paolo

(56) References cited:
- EP-A- 1 321 322
- GB-A- 696 849
- US-A- 3 695 679

## Description

The present invention relates to equipment for motor vehicles with internal combustion engines, more specifically to the equipment affecting air circulation in the engine compartment, and its subject is an air transfer device in such an engine compartment, and also a vehicle comprising this device.

Currently, in the majority of motor vehicles with the internal combustion engine located at the front, the main radiator for the cooling system is located directly behind the grille and the air circulates freely in the engine compartment, into which it is drawn through the air filter by the air intake system of the engine.

It has recently been proposed to move the radiator behind the engine, i.e. to the rear of the engine compartment (close to the passenger compartment), the air penetrating into the engine compartment which is closed by the bonnet (through the grille) being brought to the radiator placed behind the engine by a pipe or flat conduit.

This pipe or flat conduit extends substantially from the rear surface of the grille to the radiator which has been moved toward the rear of the engine compartment, passing between the top of the engine and the bonnet.

This pipe or conduit is, because of its size, fixed both to the engine and to the bodywork. This double fixing leads to stresses in the structure of this hollow air transfer element, because of the vibration of the engine block in relation to the bodywork when the engine is switched on.

Moreover, this double fixing means that work on the engine, even for the checks or general adjustments normally performed by the owner of the vehicle, is tiresome because of additional assembly and dismantling operations required for this pipe or conduit.

EP-A-1 321 322 discloses a conduit device according to the preamble of claim 1.

The object of the present invention is, in particular, to overcome at least some, but preferably all, of the disadvantages listed above.

To this end, the subject of the present invention is an air transfer device of the type mentioned above, namely as disclosed by claim 1.

The invention will be better understood from the description which follows, which relates to a preferred embodiment, given as a non-limiting example and explained with reference to the accompanying schematic drawings, in which:
Figure 1 is a perspective isometric view of the front of the device according to the invention;
Figures 2 and 3 are perspective isometric views from below (from different angles) of the device in Figure 1, the fourth part of it being removed;
Figure 4 is a lateral elevation and longitudinal section of the device as shown in Figures 2 and 3;
Figures 5 and 6 are cross sections and perspective views (from two different angles) of the device as shown in Figures 2 and 3; and
Figure 7 is a perspective isometric view of the third constituent part of the device shown in Figures 1 to 6.

These figures show a device 1 for air transfer in an engine compartment of a motor vehicle with an internal combustion engine. In such an engine compartment, the flow of air entering through the grille or through a similar front opening is taken into a space located toward the rear of said compartment, beyond the engine, for example in a space enclosing at least one radiator or a similar air heater of the engine cooling system. The device 1 in question includes in particular a flat conduit 2 defining an air circulation run passing between the engine block and the bonnet.

According to the invention, said device 1 is basically composed of four constituent parts, namely, a first part 3 in the form of a plate fixed to the engine, a second part 4 connected to the vehicle bodywork and extending around the first part 3 forming, in cooperation with said first part, the lower part of the flat conduit 2, an annular third part 5 linking said first and second parts 3 and 4 and providing a link with mechanical isolation between them and a fourth part 6 in the form of a cover or a detachable bonnet, complementary to the composite structural assembly composed of the first, second and third parts 3, 4 and 5 and forming said flat conduit 2 by cooperation with this assembly.

Such an embodiment of several separate elementary constituent parts allows easy assembly and dismantling of the device 1 and, because of the third constituent part 5, it is possible to limit the transmission of engine vibrations only to the first constituent part 3 directly linked therewith, the stresses and relative movements between the first and other constituent parts of the device 1 being absorbed by said third constituent part 5.

In order to retain piping of the air flow passing through the engine compartment after the flat conduit 2 and to bring said flow in the best way possible to the elements intended to treat it, the device 1 also includes a fifth constituent part 7 defining a portion 7' at least of a housing for at least one fan, preferably associated with a radiator and/or with an intake aperture of a system of air distribution conduits in the passenger compartment of the vehicle, this fifth constituent part 7 being mechanically assembled and fluidically connected to the outlet aperture 2' of the flat conduit 2 and fixed to the vehicle bodywork, preferably in the region of the portion 7'.

Preferably, the fifth constituent part 7 has a flared shape, with an increase in its flow area from its end connected to the outlet aperture 2' of the flat conduit 2 up to its end forming at least one, preferably two, portions 7' of housing for fans.

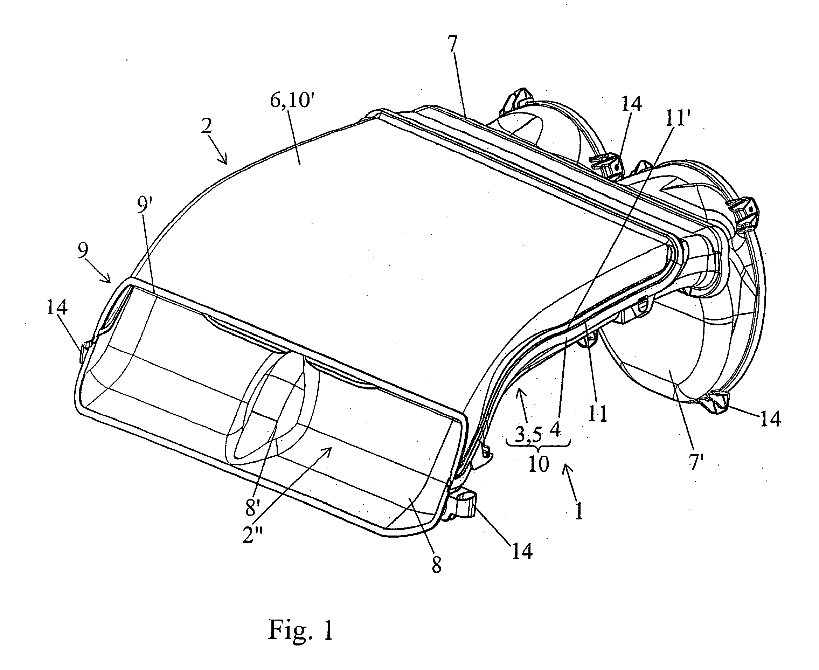

According to an advantageous characteristic of the invention, shown in Figure 1 in the accompanying drawings and enabling natural intake of a sufficient air flow through the grille, the flat conduit 2 has a front inlet 2" with a large open area, obtained by cooperation with a front end of the second part 4 terminating in a portion 8 curved downward in the form of a lower hanging lip with a front end of the fourth part 6 having a reflex front cutout defining an end portion 9' in the form of an upper turned-up lip.

Of course, the faces of the first, second and fourth parts 3, 4 and 6 in contact with the air in circulation will have the smoothest surfaces possible without unevenness and indentations in order to ensure the maximum laminar flow. The surface of the first part 3, in particular, will correspond to and be substantially level with the surface of the second part 4, and with the third part 5, being located substantially within the same plane.

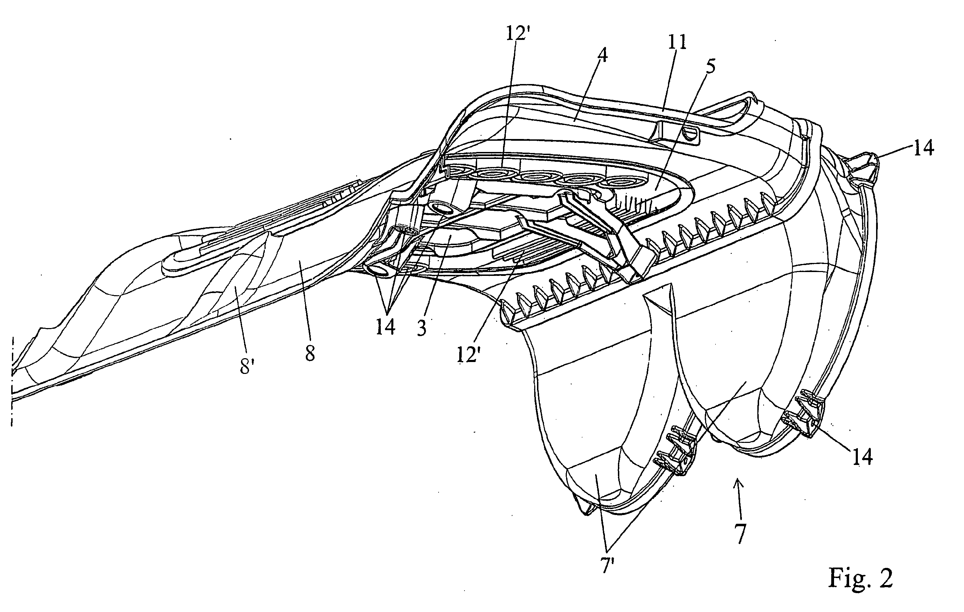

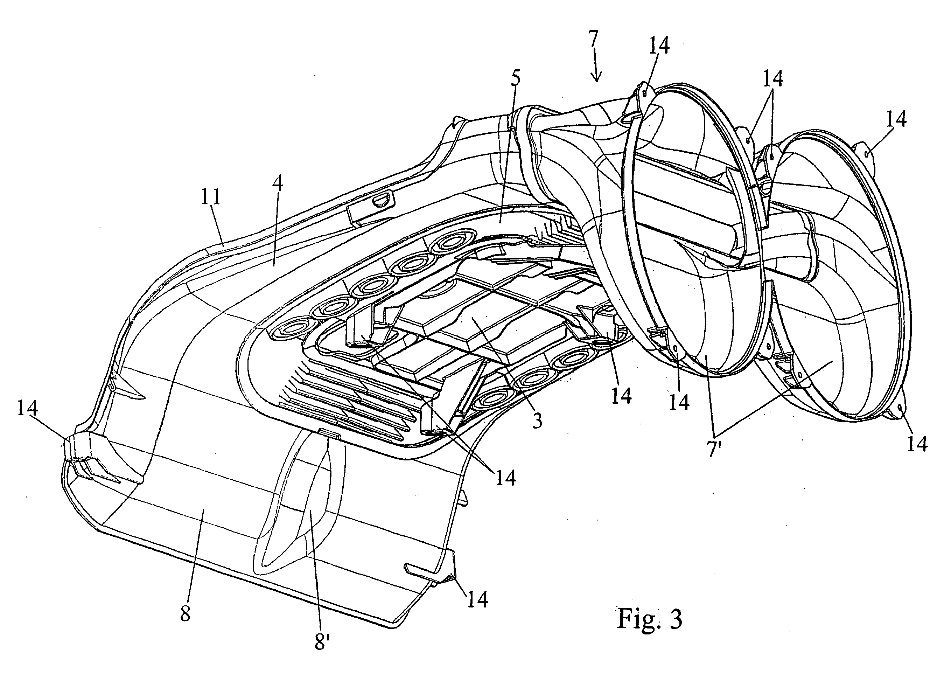

Nevertheless, at least one of these parts 3, 4 and 5 may also include a surface portion and a deformed wall 8' to accommodate a component or underlying projecting element, for example of the engine block. So, as shown in Figures 1 to 4 in the accompanying figures, the curved front portion 8 of the second part 4 may have a deformed wall portion 8'.

To facilitate assembly and partial or total dismantling of the device 1, and in particular to make access to the first constituent part 3, and therefore to the engine, easy, provision may be made for the composite structural assembly incorporating the first, second and third constituent parts 3, 4 and 5 to form a first half-shell 10 and for the fourth constituent part 6 to form a second half-shell 10', these two half-shells 10 and 10' being in contact or fitted together with at least their sides 11 and 11', which are of complementary shape, forming the flat conduit 2.

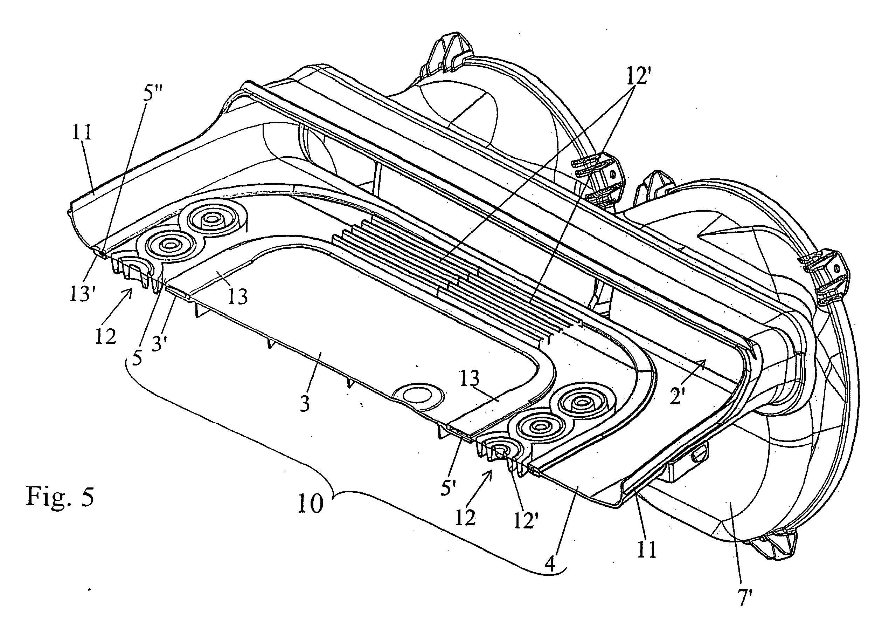

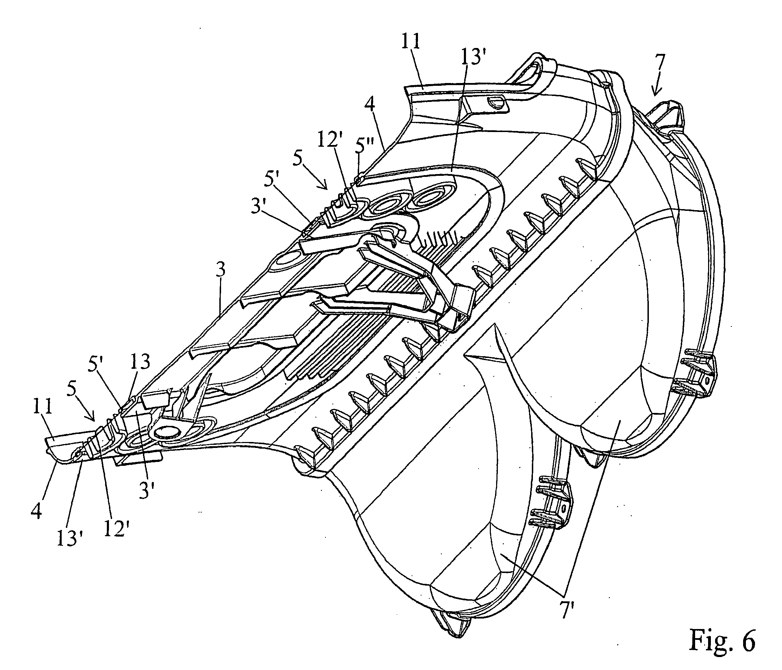

According to a first variation, seen in Figures 1 to 6 of the accompanying drawings, the two half-shells 10 and 10' are fitted together so that they are detachable, preferably by hooking together with resilient interlocking, at least in the region of the low lateral walls of the flat conduit 2.

According to a second variation of embodiment, not shown in the accompanying drawings, the half-shell 10' composed of the fourth constituent part 6 is connected to the internal surface of the bonnet covering the vehicle engine compartment and its sides 11' at least come into contact with the sides 11 of complementary shape of the second constituent part 4 incorporated into the composite structural assembly 3, 4 and 5 forming the other half-shell 10, when the bonnet is up or closed.

In addition, the edges 11, 11' of the two half-shells 10 and 10', in contact with each other or fitted together, may advantageously form a seal, at least relative, to air, by means of a sealing strip fitted on one of the two edges concerned and/or by together forming a structure with deflectors between the edges 11 and 11' fitted or in contact.

Moreover, the sides 11, 11' of the first and/or second half-shell(s) 10 and/or 10' may include a preferred fracture zone in the event of compression of the flat conduit 2, permitting a retraction of the bonnet of the engine compartment if it is subjected to a pressure greater than a pre-defined value resulting, for example, from a pedestrian falling on this bonnet.

In order to provide an interface for hooking and a tough, rigid connection for the fifth constituent part 7, the second constituent part 4 may include a tubular part 4' at one of its longitudinal ends, this tubular part 4' forming the end portion of the flat conduit 2 emerging at the outlet aperture 2' of said flat conduit.

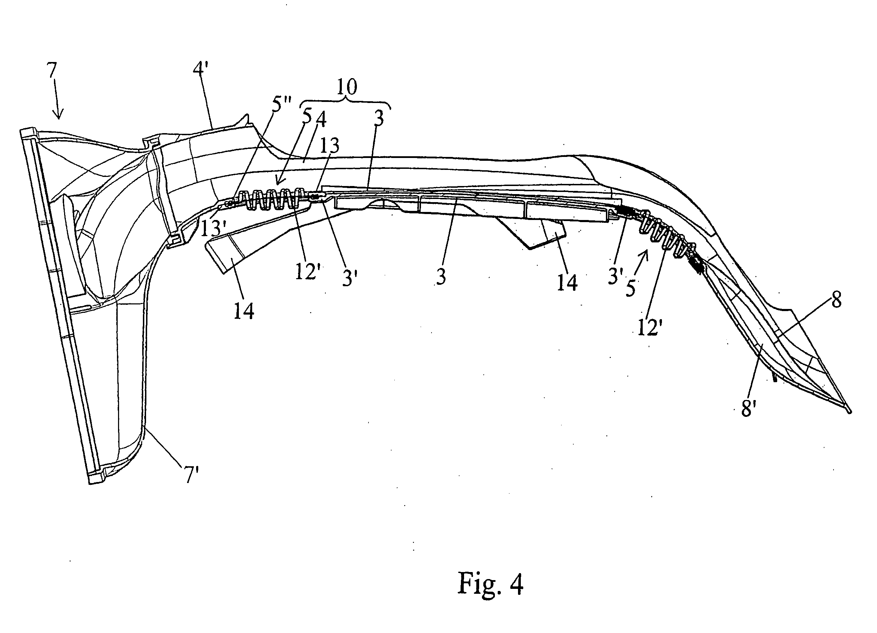

According to a very advantageous characteristic of the invention, shown in particular in Figures 4 to 6 in the accompanying drawings, the first constituent part 3 in the form of a plate is fitted so that it is detachable, by its circumference, to the third constituent part 5, said third constituent part consisting of an annular seal of substantially flat structure made of a resiliently deformable material.

Said detachable assembly may, for example, consist of pinching or hooking an internal edge of the ring seal 5 between the external peripheral edge 3' of the first constituent part 3 (forming the circumference thereof) and a fitted frame 13, connected, so that it is detachable, to said circumference of the first constituent part 3 (for example, by resilient interlocking).

Such a detachable assembly may if necessary also be provided between the circumference (external peripheral edge 5") of the ring seal 5 and the internal outline of the cutout of the second constituent part 4 receiving the first constituent part 3 (provision of a detachable frame 13' fitted on the edge defining said internal outline).

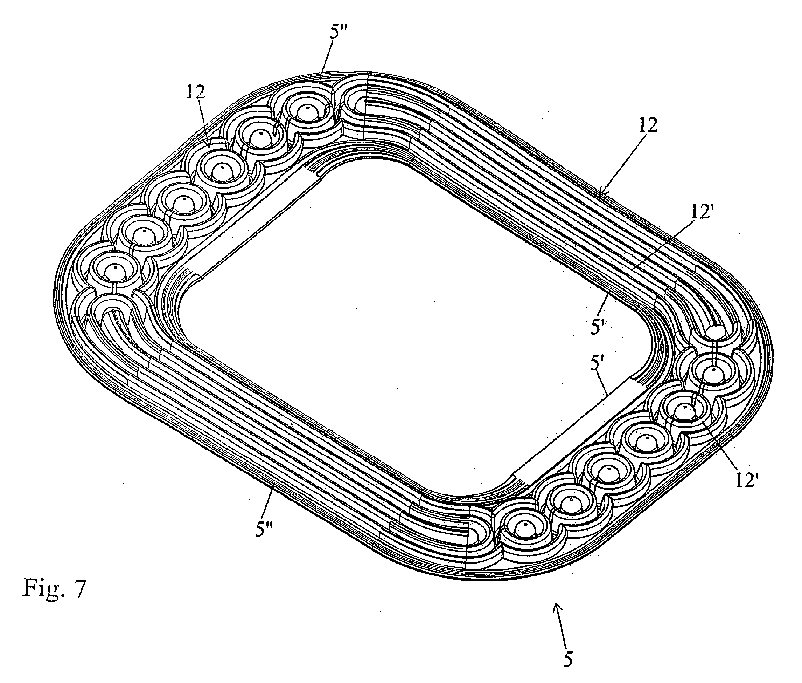

Preferably, and in particular for reasons of ease of manufacture, economy of material, reduced overall size and optimum absorption of vibrations, the seal (5) is made of sheets or plates provided with zones (12) of preferred or extensible deformation and the plate (3) forming the first constituent part is substantially rectangular, the zones of preferred deformation (12) being preferably located opposite the sides of the rectangle with rounded corners formed by said plate (3) (Figure 7 and Figures 2 to 6).

Advantageously, the zones of preferred or extensible deformation 12 of the seal 5 consist of localised corrugations 12' of the material in sheets or plates forming said seal 5. Preferably, the seal 5 includes, in the preferred deformation zones 12, a plurality of corrugations 12' between the edges opposite the first and second constituent parts 3 and 4, these corrugations, parallel to each other, being arranged in concentric circles and/or lines that are straight or not straight.

In common applications of the device 1 according to the invention, the annular seal 5 will preferably have a capacity for deformation of substantially 35 mm in the front-back direction (longitudinal direction of the motor vehicle) and substantially 10 mm in the transverse or right-left direction, so that it can absorb over its functional width (distance separating the external circumference of the plate forming the first constituent part 3 from the internal outline of the cutout made in the second constituent part 4).

According to a preferred practical embodiment of the invention, the first, second, fourth and fifth constituent parts 3, 4, 6 and 7 consist of injection-moulded parts made of a thermoplastic material, if necessary reinforced with fibres, the third constituent part 5 being made of a resilient polymer material, such as, for example, synthetic rubber, and the fifth constituent part 7 being possibly formed in a single piece with the second constituent part 4.

The first and second parts 3 and 4 are connected to the engine or engine block and to the bodywork respectively by means of connecting appendages 14 formed in a single piece with these parts 3 and 4 like, for example, eye mountings, eyelets or the like, if necessary located at the ends of corresponding lugs (Figures 1 to 4).

In addition, the different constituent parts 3 to 6 of the flat conduit 2, together with, if necessary, the fifth part 7, may have ribs or flanges for strengthening or structural reinforcement, in particular in the zones subjected to high stresses (for example, assembly or fixing zones).

The present invention also relates to a motor vehicle with an internal combustion engine, comprising an engine compartment closed with a bonnet and with an air intake aperture in the form of a grille or the like, a vehicle characterised in that it has a device 1 for air transfer as described above and as shown in Figures 1 to 6, the flat conduit 2 defining an air circulation passage extending laterally over the greater part of the width of the engine compartment, in particular covering all the engine.

Of course, the invention is not limited to the embodiments described and shown in the accompanying drawings. Modifications are still possible, particularly from the point of view of the composition of the various elements or by substituting equivalent techniques, without thereby departing from the scope of protection of the invention.

## Claims

1. Device for air transfer in an engine compartment of a motor vehicle with an internal combustion engine, the air flow entering through the grille or through a similar front opening being taken to a space located toward the rear of the engine compartment, beyond the engine, said device comprising a flat conduit (2) defining an air circulation run passing between the engine block and the bonnet and a cover or detachable bonnet (6) forming a portion of said flat conduit (2), the device being **characterised in that** it comprises four constituent parts, namely, a first part (3) in the form of a plate fixed onto the engine, a second part (4) connected to the vehicle bodywork and extending around the first part (3) forming in cooperation with the said first part the lower part of the flat conduit (2), an annular third part (5) linking said first and second parts (3 and 4) providing a link with mechanical isolation between them and a fourth part (6) in the form of said cover or detachable bonnet, complementary to the composite structural assembly composed of the first, second and third parts (3, 4 and 5) and forming said flat conduit (2) by cooperation with this assembly.

2. Device according to claim 1, **characterised in that** it also includes a fifth constituent part (7) defining a portion (7') at least of a housing for at least one fan, preferably associated with a radiator and/or with an intake aperture of a system of air distribution conduits in the passenger compartment of the vehicle, this fifth constituent part (7) being mechanically assembled and fluidically connected to the outlet aperture (2') of the flat conduit (2) and fixed to the vehicle bodywork, preferably to correspond with the portion (7').

3. Device according to claim 2, **characterised in that** the fifth constituent part (7) has a flared shape, with an increase in its flow area from its end connected to the outlet aperture (2') of the flat conduit (2) to its end forming at least one, preferably two, portions (7') of housings for fans.

4. Device according to any one of claims 1 to 3, **characterised in that** the flat conduit (2) has a front inlet (2") with a large open area, obtained by cooperation with a front end of the second part (4) terminating in a portion (8) curved downward in the form of a lower hanging lip with a front end of the fourth part (6) having a reflex front cutout (9) defining an end portion (9') in the form of an upper turned-up lip.

5. Device according to any one of claims 1 to 4, **characterised in that** the composite structural assembly incorporating the first, second and third constituent parts (3, 4 and 5) forms a first half-shell (10) and **in that** the fourth constituent part (6) forms a second half-shell (10'), these two half-shells (10 and 10') being in contact or fitted together with at least their sides (11, 11'), which are of complementary shape, forming the flat conduit (2).

6. Device according to claim 5, **characterised in that** the two half-shells (10 and 10') are fitted together so that they are detachable, preferably by hooking together with resilient interlocking, at least in the region of the low lateral walls of the flat conduit (2).

7. Device according to claim 5, **characterised in that** the half-shell (10') composed of the fourth constituent part (6) is connected to the internal surface of the bonnet covering the vehicle engine compartment and its lateral sides (11') come into contact at least with the lateral sides (11), of complementary form, of the second constituent part (4) incorporated in the composite structural assembly (3, 4 and 5) forming the other half-shell (10), when the bonnet is up or closed.

8. Device according to any one of claims 5 to 7, **characterised in that** the edges (11, 11') of the two half-shells (10 and 10'), in contact with each other or fitted together, form a seal by cooperation, at least relative, to air, by means of a sealing strip fitted on one of the two edges concerned and/or by together forming a structure with deflectors between the edges 11 and 11' fitted or in contact.

9. Device according to any one of claims 5 to 8, **characterised in that** the sides (11, 11') of the first and/or the second half-shell(s) (10 and/or 10') include a preferred fracture zone in the event of compression of the flat conduit (2).

10. Device according to any one of claims 1 to 9, **characterised in that** the second constituent part (4) includes a tubular part (4') at one of its longitudinal ends, this tubular part (4') forming the end portion of the flat conduit (2) emerging at the outlet aperture (2') of said flat conduit.

11. Device according to any one of claims 1 to 10, **characterised in that** the first constituent part (3) in the form of a plate is fitted in a detachable manner, around its circumference, to the third constituent part (5), the latter consisting of an annular seal of substantially flat structure made of a resiliently deformable material.

12. Device according to claim 11, **characterised in that** the seal (5) is made of sheets or plates provided with zones (12) of preferred or extensible deformation and **in that** the plate (3) forming the first constituent part is substantially rectangular, the zones of preferred deformation (12) being preferably located opposite the sides of the rectangle with rounded corners formed by said plate (3).

13. Device according to claim 12, **characterised in that** the zones of preferred or extensible deformation (12) of the assembly seal (5) are composed of localised corrugations (12') of the material in sheets or plates forming said seal (5).

14. Device according to any one of claims 12 and 13, **characterised in that** the seal (5) includes, in the region of the preferred deformation zones (12), a plurality of corrugations (12') between the edges opposite the first and second constituent parts (3 and 4), these corrugations, parallel to each other, being arranged in concentric circles and/or in lines that are straight or not straight.

15. Device according to any one of claims 2 to 14, **characterised in that** the first, second, fourth and fifth constituent parts (3, 4, 6 and 7) consist of injection moulded parts made of a thermoplastic material, possibly reinforced with fibres, the third constituent part (5) being made of a resilient polymer material, such as, for example, synthetic rubber, and the fifth constituent part (7) possibly being formed in a single piece with the second constituent part (4).

16. Motor vehicle with an internal combustion engine, comprising an engine compartment closed by a bonnet and with an air intake aperture in the form of a grille or the like, the vehicle **characterised in that** it is provided with a device (1) for air transfer according to any one of claims 1 to 15, the flat conduit (2) defining an air circulation passage extending laterally over the greater part of the width of the engine compartment, covering, in particular, the whole engine.

## Patentansprüche

1. Lüftungsvorrichtung in einem Motorraum eines Kraftfahrzeugs mit einer Brennkraftmaschine, wobei der Luftstrom durch den Grill oder durch eine ähnliche Frontöffnung eintritt und zu einem Raum, der der Rückseite des Motorraums zugewandt ist, über die Maschine hinaus geleitet wird, wobei die Vorrichtung ein flaches Leitungsrohr (2) enthält, das einen Luftzirkulationslauf definiert, der zwischen dem Motorblock und der Motorhaube und einer Abdeckung oder abnehmbaren Motorhaube (6) verläuft, die einen Teil des flachen Leitungsrohres bildet, wobei die Vorrichtung **dadurch gekennzeichnet ist, dass** sie vier Bestandteile enthält, nämlich einen ersten Teil (3) in Gestalt einer Platte, die auf der Maschine befestigt ist, einen zweiten Teil (4), der mit der Fahrzeugkarosserie verbunden ist und sich um den ersten Teil (3) erstreckt und im Zusammenwirken mit dem ersten Teil den unteren Teil des flachen Leitungsrohres (2) bildet, einen ringförmigen dritten Teil (5), der den ersten Teil (3) und den zweiten Teil (4) verbindet und eine Verbindung mit mechanischer Trennung zwischen diesen und dem vierten Teil (6) in Gestalt der Abdeckung oder abnehmbaren Motorhaube, komplementär zum zusammengesetzten Konstruktionsaufbau, bestehend aus dem ersten, dem zweiten und dem dritten Teil (3, 4 und 5), bereitstellt und das flache Leitungsrohr (2) durch Zusammenwirken mit dieser Anordnung ausbildet.

2. Vorrichtung nach Anspruch 1, **dadurch gekennzeichnet, dass** sie zudem einen vierten Bestandteil (7) enthält, der einen Teil (7) wenigstens eines Gehäuses für wenigstens ein Gebläse definiert, das vorzugsweise einem Radiator und/oder einer Einlassöffnung eines Systems von Luftverteilungsleitungsrohren in der Fahrgastzelle des Fahrzeugs zugeordnet ist, wobei dieser fünfte Bestandteil (7) mit der Auslassöffnung (2') des flachen Leitungsrohres (2) mechanisch zusammengesetzt und fluidführend verbunden ist und an der Fahrzeugkarosserie befestigt ist, um mit dem Teil (7') zu korrespondieren.

3. Vorrichtung nach Anspruch 2, **dadurch gekennzeichnet, dass** der erste Bestandteil (7) eine aufgeweitete Form hat, dessen Strömungsquerschnitt von seinem Ende, das mit der Auslassöffnung (2') des flachen Leitungsrohres (2) verbunden ist, zu seinem Ende, das wenigstens einen, vorzugsweise zwei Abschnitte (7') der Gehäuse der Gebläse ausbildet, zunimmt.

4. Vorrichtung nach einem der Ansprüche 1 bis 3, **dadurch gekennzeichnet, dass** das flache Leitungsrohr (2) einen vorderen Einlass (2") mit einer großen Öffnungsfläche hat, die man durch Zusammenwirken mit einem vorderen Ende des zweiten Teils (4) erhält, der in einem Abschnitt (8) endet, der nach unten in Gestalt einer unteren hängenden Lippe gekrümmt ist, wobei ein vorderes Ende des vierten Teils (6) einen spiegelgleichen vorderen Ausschnitt (9) aufweist, der einen Endabschnitt (9) in Gestalt einer oberen, nach oben gebogenen Lippe definiert.

5. Vorrichtung nach einem der Ansprüche 1 bis 4, **dadurch gekennzeichnet, dass** der zusammengesetzte Konstruktionsaufbau, der den ersten, den zweiten und den dritten Teil (3, 4 und 5) enthält, eine erste Halbschale (10) bildet, und dadurch, dass der vierte Bestandteil (6) eine zweite Halbschale (10') bildet, wobei diese beiden Halbschalen (10 und 10') wenigstens mit ihren Seiten (11, 11'), die eine komplementäre Form haben, miteinander in Kontakt stehen oder zusammengepasst sind und das flache Leitungsrohr (2) bilden.

6. Vorrichtung nach Anspruch 5, **dadurch gekennzeichnet, dass** die beiden Halbschalen (10 und 10') derart zusammengepasst sind, dass sie lösbar sind, vorzugsweise dadurch, dass sie mit einer elastischen Verriegelung wenigstens im Bereich der unteren Seitenwände des flachen Leitungsrohres (2) miteinander verhakt sind.

7. Vorrichtung nach Anspruch 5, **dadurch gekennzeichnet, dass** die Halbschale (10'), die aus dem vierten Bestandteil (6) besteht, mit der Innenoberfläche der Motorhaube verbunden ist, die den Motorraum bedeckt, und ihre seitlichen Seiten (11') wenigstens mit den seitlichen Seiten (11) komplementärer Form des zweiten Bestandteils (4) in Berührung kommen, der im zusammengesetzten Konstruktionsaufbau (3, 4 und 5) enthalten ist, der die andere Halbschale (10) bildet, wenn die Motorhaube geöffnet oder geschlossen ist.

8. Vorrichtung nach einem der Ansprüche 5 bis 7, **dadurch gekennzeichnet, dass** die Ränder (11, 11') der beiden Halbschalen (10 und 10'), die miteinander in Kontakt stehen oder zusammengepasst sind, durch Zusammenwirken wenigstens relativ eine Abdichtung gegenüber Luft mit Hilfe eines Dichtungsstreifens bilden, der an einem der beiden betreffenden Ränder angebracht ist und/oder durch gemeinsames Ausbilden eines Aufbaus mit Ablenkflächen zwischen den Rändern 11 und 11', die zusammengepasst sind oder in Kontakt stehen.

9. Vorrichtung nach einem der Ansprüche 5 bis 8, **dadurch gekennzeichnet, dass** die Seiten (11, 11') der ersten und/oder der zweiten Halbschale(n) (10 und/oder 10') einen Sollbruchbereich für den Fall der Kompression des flachen Leitungsrohrs (2) enthalten.

10. Vorrichtung nach einem der Ansprüche 1 bis 9, **dadurch gekennzeichnet, dass** der zweite Bestandteil (4) einen röhrenförmigen Teil (4') an einem seiner Längsenden enthält, wobei dieser röhrenförmige Teil (4') den Endabschnitt des flachen Leitungsrohres (2) bildet, der an der Auslassöffnung (2') des flachen Leitungsrohres austritt.

11. Vorrichtung nach einem der Ansprüche 1 bis 10, **dadurch gekennzeichnet, dass** der erste Bestandteil (3) in Gestalt einer Platte entlang seines Umfangs lösbar an den dritten Bestandteil (5) angepasst ist, wobei letztgenannter aus einer ringförmigen Dichtung eines im wesentlichen flachen Aufbaus besteht, der aus einem elastisch verformbaren Material gefertigt ist.

12. Vorrichtung nach Anspruch 11, **dadurch gekennzeichnet, dass** die Dichtung (5) aus Folien oder Platten besteht, die mit Zonen (12) einer bevorzugten oder erweiterbaren Verformung versehen sind, und dadurch, dass die Platte (3), die den ersten Bestandteil bildet, im wesentlichen rechteckig ist, wobei sich die Zonen der bevorzugten Verformung (12) vorzugsweise gegenüberliegend zu den Seiten des Rechtecks mit gerundeten Ecken befinden, das von der Platte (3) ausgebildet ist.

13. Vorrichtung nach Anspruch 12, **dadurch gekennzeichnet, dass** die Zonen der bevorzugten oder erweiterbaren Verformung (12) der Einbaudichtung (5) aus örtlichen Riffeln (12') des Materials in Folien oder Platten bestehen, die die Dichtung (5) bilden.

14. Vorrichtung nach einem der Ansprüche 12 und 13, **dadurch gekennzeichnet, dass** die Dichtung (5) im Bereich der Zonen (12) bevorzugter Verformung eine Vielzahl von Riffeln (12') zwischen den Rändern gegenüberliegend dem ersten und dem zweiten Bestandteil (3 und 4) enthält, wobei diese Verformungen parallel zueinander in konzentrischen Kreisen und/oder in Linien angeordnet sind, die gerade oder nicht gerade sind.

15. Vorrichtung nach einem der Ansprüche 2 bis 14, **dadurch gekennzeichnet, dass** der erste, zweite, vierte und fünfte Bestandteil (3, 4, 6 und 7) aus spritzgegossenen Teilen bestehen, die aus einem thermoplastischen Material bestehen, das möglicherweise mit Fasern verstärkt ist, der dritte Bestandteil (5) aus einem elastischen Polymermaterial, wie etwa beispielsweise synthetischem Kautschuk besteht und der fünfte Bestandteil (7) möglicherweise in einem einzigen Stück mit dem zweiten Bestandteil (4) ausgebildet ist.

16. Kraftfahrzeug mit einer Brennkraftmaschine, enthaltend einen Motorraum, der mit einer Motorhaube geschlossen ist, und mit einer Lufteinlassöffnung in Gestalt eines Grills oder dergleichen, wobei das Fahrzeug **dadurch gekennzeichnet ist, dass** es mit der Lüftungsvorrichtung (1) nach einem der Ansprüche 1 bis 15 ausgestattet ist, wobei das flache Leitungsrohr (2) einen Luftzirkulationsleitungsweg bildet, der sich seitlich über den größeren Teil der Breite des Motorraums erstreckt und insbesondere die gesamte Maschine abdeckt.

## Revendications

1. Dispositif de transport d'air dans un compartiment moteur d'un véhicule automobile à moteur à combustion interne, le flux d'air entrant au niveau de la calandre ou d'une ouverture frontale analogue étant amené au niveau d'un volume situé vers l'arrière du compartiment moteur, au-delà du moteur, ledit dispositif comprenant un conduit plat (2) définissant un passage de circulation d'air passant entre le bloc moteur et le capot et un couvercle ou capot amovible (6) formant une partie dudit conduit plat (2), dispositif **caractérisé en ce qu'**il comprend quatre parties constitutives, à savoir, une première partie (3) en forme de plaque fixée sur le moteur, une deuxième partie (4) solidarisée avec la carrosserie du véhicule et s'étendant autour de la première partie (3) en formant en coopération avec cette dernière la partie inférieure du conduit plat (2), une troisième partie (5) de forme annulaire reliant lesdites première et deuxième parties (3 et 4) en fournissant une liaison avec découplage mécanique entre elles et une quatrième partie (6) sous forme dudit couvercle ou capot amovible, complémentaire de l'ensemble structurel composite composé des première, deuxième et troisième parties (3, 4 et 5) et formant par coopération avec cet ensemble ledit conduit plat (2).

2. Dispositif selon la revendication 1, **caractérisé en ce qu'**il comporte en outre une cinquième partie constitutive (7) définissant une portion (7') au moins d'un carter pour au moins une soufflante, préférentiellement associée à un radiateur et/ou à une ouverture d'entrée d'un système de conduits de distribution d'air dans l'habitacle du véhicule, cette cinquième partie constitutive (7) étant assemblée mécaniquement et raccordée fluidiquement à l'ouverture de sortie (2') du conduit plat (2) et fixée à la carrosserie du véhicule, préférentiellement au niveau de la portion (7').

3. Dispositif selon la revendication 2, **caractérisé en ce que** la cinquième partie constitutive (7) présente une forme évasée, avec un accroissement de sa section de passage depuis son extrémité raccordée à l'ouverture de sortie (2') du conduit plat (2) jusqu'à son extrémité formant au moins une, préférentiellement deux portions (7') de carters pour soufflantes.

4. Dispositif selon l'une quelconque des revendications 1 à 3, **caractérisé en ce que** le conduit plat (2) présente une bouche d'aspiration frontale (2") avec une grande surface d'ouverture, obtenue par coopération d'une extrémité frontale de la deuxième partie (4) se terminant par une portion (8) incurvée vers le bas en forme de lèvre inférieure pendante avec une extrémité frontale de la quatrième partie (6) présentant une découpe frontale rentrante (9) définissant une portion d'extrémité (9') en forme de lèvre supérieure retroussée.

5. Dispositif selon l'une quelconque des revendications 1 à 4, **caractérisé en ce que** l'ensemble structurel composite intégrant les première, deuxième et troisième parties constitutives (3, 4, 5) forme une première demi-coque (10) et **en ce que** la quatrième partie (6) constitutive forme une seconde demi-coque (10'), ces deux demi-coques (10 et 10') étant mises en contact ou assemblées entre elles au moins au niveau de leurs bords latéraux (11, 11') de formes complémentaires pour former le conduit plat (2).

6. Dispositif selon la revendication 5, **caractérisé en ce que** les deux demi-coques (10 et 10') sont assemblées entre elles de manière amovible, préférentiellement par accrochage par enclenchement élastique, au moins au niveau des parois latérales de faible hauteur du conduit plat (2).

7. Dispositif selon la revendication 5, **caractérisé en ce que** la demi-coque (10') constituée par la quatrième partie constitutive (6) est solidarisée sur la face interne du capot du compartiment moteur du véhicule et vient en contact par ses bords latéraux (11') au moins avec les bords latéraux (11) de forme respectivement complémentaire de la deuxième partie constitutive (4) intégrée à l'ensemble structurel composite (3, 4, 5) formant l'autre demi-coque (10), lorsque le capot est en position rabattue ou fermée.

8. Dispositif selon l'une quelconque des revendications 5 à 7, **caractérisé en ce que** les bords mutuellement en contact ou assemblés (11, 11') des deux demi-coques (10 et 10') réalisent par coopération une étanchéité, au moins relative, à l'air, ce par l'intermédiaire d'une garniture d'étanchéité rapportée sur l'un des deux bords concernés et/ou par formation par coopération d'une structure à chicanes entre les bords (11 et 11') assemblés ou mis en contact.

9. Dispositif selon l'une quelconque des revendications 5 à 8, **caractérisé en ce que** les bords latéraux (11, 11') de la première et/ou de la seconde demi-coque(s) (10 et/ou 10') comportent une zone de rupture privilégiée en cas de compression du conduit plat (2).

10. Dispositif selon l'une quelconque des revendications 1 à 9, **caractérisé en ce que** la deuxième partie (4) constitutive comprend une partie tubulaire (4') à l'une de ses extrémités longitudinales, cette partie tubulaire (4') formant la portion d'extrémité du conduit plat (2) débouchant sur l'ouverture de sortie (2') de ce dernier.

11. Dispositif selon l'une quelconque des revendications 1 à 10, **caractérisé en ce que** la première partie constitutive (3) en forme de plaque est assemblée de manière amovible, sur son pourtour, avec la troisième partie constitutive (5), cette dernière consistant en un joint d'assemblage annulaire à structure sensiblement plane en un matériau élastiquement déformable.

12. Dispositif selon la revendication 11, **caractérisé en ce que** le joint d'assemblage (5) présente une constitution en feuille ou en plaque pourvue de zones (12) de déformation privilégiée ou extensible et **en ce que** la plaque (3) formant la première partie constitutive présente une forme sensiblement rectangulaire, les zones de déformation privilégiée (12) étant préférentiellement situées en regard des côtés du rectangle à angles arrondis formé par ladite plaque (3).

13. Dispositif selon la revendication 12, **caractérisé en ce que** les zones de déformation privilégiée ou extensible (12) du joint d'assemblage (5) sont constituées par des ondulations localisées (12') du matériau en feuille ou en plaque formant ledit joint (5).

14. Dispositif selon l'une quelconque des revendications 12 et 13, **caractérisé en ce que** le joint d'assemblage (5) comporte, au niveau des zones de déformation privilégiée (12), une pluralité d'ondulations (12') entre les bords en regard des première et deuxième parties constitutives (3 et 4), ces ondulations parallèles entre elles étant agencées selon des cercles concentriques et/ou selon des lignes rectilignes ou non.

15. Dispositif selon l'une quelconque des revendications 2 à 14, **caractérisé en ce que** les première, deuxième, quatrième et cinquième parties constitutives (3, 4, 6, 7) consistent en des pièces moulées par injection en un matériau thermoplastique, éventuellement renforcé par des fibres, la troisième partie constitutive (5) étant réalisée en un matériau polymère élastique, tel que par exemple du caoutchouc synthétique et la cinquième partie constitutive (7) étant éventuellement formée d'un seul tenant avec la deuxième partie constitutive (4).

16. Véhicule automobile à moteur à combustion interne, comportant un compartiment moteur fermé par un capot et présentant une ouverture d'admission d'air sous la forme d'une calandre ou analogue, véhicule **caractérisé en ce qu'**il est pourvu d'un dispositif (1) de transport d'air selon l'une quelconque des revendications 1 à 15, le conduit plat (2) définissant un passage de circulation d'air s'étendant latéralement sur la majeure partie de la largeur du compartiment moteur, en recouvrant notamment la totalité du moteur.
